# EUROPEAN PATENT APPLICATION

(11) **EP 4 496 044 A1**
(43) Date of publication of application: **22.01.2025**
(21) Application number: 22932305.0
(22) Date of filing: 18.11.2022
(51) Int. Cl.: H01M 4/86, H01M 4/88, H01M 8/10

(54) **CATALYST LAYER, ELECTROLYTE MEMBRANE-ELECTRODE ASSEMBLY, FUEL CELL, AND METHOD FOR MANUFACTURING CATALYST LAYER**

(30) Priority: 14.03.2022 JP 2022038765
(71) Applicant: Panasonic Intellectual Property Management Co., Ltd., Kadoma-shi, Osaka 571-0057 (JP)
(72) Inventor: GEMBA, Miho, Kadoma-shi, Osaka 571-0057 (JP); AKATSUKA, Takuya, Kadoma-shi, Osaka 571-0057 (JP); ENDO, Noriaki, Kadoma-shi, Osaka 571-0057 (JP); HIKICHI, Takumi, Kadoma-shi, Osaka 571-0057 (JP)
(74) Representative: Grünecker Patent- und Rechtsanwälte PartG mbB
(86) International application number: PCT/JP2022/042786
(87) International publication number: WO 2023/176042

(57) **Abstract**

A catalyst layer according to Embodiment 1 includes: a mesoporous material (12) that is electrically conductive; and a catalyst (14) that is supported at least in a pore of the mesoporous material (12). The catalyst layer also includes: a catalyst-unsupporting fiber (11) that does not support the catalyst (14); and an ionomer (13) that has a hydrogen ion conductivity and at least partially covers a surface of the mesoporous material (12) and a surface of the catalyst-unsupporting fiber (11). The catalyst-unsupporting fiber (11) has a hydrophobicity that is higher than a hydrophobicity of the mesoporous material (12). The ionomer (13) contains a hydrophobic main chain and a hydrophilic side chain. A ratio of a surface area of a portion of the catalyst-unsupporting fiber (11) covered with the ionomer (13) to a total surface area of the catalyst-unsupporting fiber (11) is greater than a ratio of a surface area of a portion of the mesoporous material (12) covered with the ionomer (13) to a total surface area of the mesoporous material (12).

## Description

### TECHNICAL FIELD

The present disclosure relates to a catalyst layer, an electrolyte membrane electrode assembly that includes the catalyst layer, a fuel cell that includes the electrolyte membrane electrode assembly, and a method for manufacturing the catalyst layer.

### BACKGROUND ART

For example, Patent Literature (PTL) 1 discloses a catalyst layer in which a mesoporous material that includes pores, in which a catalyst is supported, is covered with an ionomer. The catalyst layer includes a mesoporous material, a catalyst that is supported at least in the pores of the mesoporous material, catalyst-unsupporting carbon, and an ionomer that covers the mesoporous material, the catalyst and the catalyst-unsupporting carbon.

### Citation List

### Patent Literature

[PTL 1] Japanese Unexamined Patent Application Publication No. 2018-181838

### SUMMARY OF THE INVENTION

The present disclosure provides a catalyst layer, an electrolyte membrane electrode assembly, a fuel cell, and a method for manufacturing the catalyst layer that are capable of increasing the hydrogen ion conductivity, leading to a relatively high-efficiency catalytic reaction, while reducing poisoning of the catalyst by the ionomer.

A catalyst layer according to the present disclosure is used in an electrolyte membrane electrode assembly. The catalyst layer includes: a mesoporous material that has an electrical conductivity; and a catalyst that is supported at least in the pores of the mesoporous material. The catalyst layer also includes a catalyst-unsupporting fiber that does not support the catalyst, and an ionomer that has a hydrogen ion conductivity and at least partially covers the surface of the mesoporous material and the surface of the catalyst-unsupporting fiber. The catalyst-unsupporting fiber has a hydrophobicity that is higher than a hydrophobicity of the mesoporous material. The ionomer contains a hydrophobic main chain and a hydrophilic side chain. The ratio of a surface area of a portion of the catalyst-unsupporting fiber covered with the ionomer to a total surface area of the catalyst-unsupporting fiber is greater than the ratio of a surface area of a portion of the mesoporous material covered with the ionomer to a total surface area of the mesoporous material.

Moreover, the electrolyte membrane electrode assembly according to the present disclosure includes: an electrolyte membrane; an anode that is disposed on a first main surface of the electrolyte membrane; and a cathode that is disposed on a second main surface of the electrolyte membrane. The cathode includes the catalyst layer.

Moreover, a fuel cell according to the present disclosure includes the electrolyte membrane electrode assembly described above.

Moreover, a catalyst layer manufacturing method according to the present disclosure is a method for manufacturing a catalyst layer that is used in an electrolyte membrane electrode assembly. The catalyst layer manufacturing method includes: a first step of mixing and dispersing (i) an ionomer that has a hydrogen ion conductivity and contains a hydrophobic main chain and a hydrophilic side chain, (ii) a catalyst-unsupporting fiber that does not support the catalyst; and (iii) a hydrophilic solvent. The catalyst layer manufacturing method further includes: adding and mixing a mesoporous material that includes a pore in which the catalyst is supported to a mixture obtained in the first step, to obtain an ink. The catalyst-unsupporting fiber has a hydrophobicity that is higher than a hydrophobicity of the mesoporous material.

The catalyst layer, the electrolyte membrane electrode assembly, the fuel cell, and the method for manufacturing the catalyst layer according to the present disclosure are capable of increasing the hydrogen ion conductivity, leading to a relatively high-efficiency catalytic reaction, while reducing poisoning of the catalyst by the ionomer.

### BRIEF DESCRIPTION OF THE DRAWINGS

[FIG. 1] FIG. 1 is a schematic diagram illustrating a fuel cell according to Embodiment 1.
[FIG. 2] FIG. 2 schematically illustrates an enlarged cross-sectional view of a cathode catalyst layer according to Embodiment 1.
[FIG. 3] FIG. 3 is a flowchart of a method for manufacturing a cathode catalyst layer according to Embodiment 1.

### DESCRIPTION OF EMBODIMENT

### (Underlying Knowledge Forming Basis of the Present Disclosure)

At the time the inventors arrived at the present disclosure, the technique of forming a three-phase interface in the catalyst layer of a fuel cell was thought to increase the performance by bringing the catalyst into contact with the ionomer in view of hydrogen ion supply. In recent years, however, it has been found that the catalyst is poisoned by the ionomer due to contact between the ionomer and the catalyst, which rather reduces the performance.

Therefore, in the industry, in order to reduce poisoning of the catalyst by the ionomer, it was common to design products that do not cause contact between the ionomer and the catalyst by enclosing the catalyst in a carbon support that includes a large number of pores, such as a mesoporous material.

However, the catalyst near the entrance of the pores of the mesoporous material contacts the ionomer, and poisoning of the catalyst by the ionomer is not sufficiently reduced, resulting in the following problem. In other words, there is a conflicting problem that an increased amount of ionomer increases poisoning of the catalyst by the ionomer, while a reduced amount of ionomer leads to discontinuity of the ionomer in the catalyst layer, resulting in a higher hydrogen ion resistance of the electrolyte membrane electrode assembly.

Under these circumstances, in order to solve the conflicting problem, the inventors came up with the idea of connecting agglomerates of the ionomer and the mesoporous material with catalyst-unsupporting fiber covered with the ionomer. The inventors arrived at the idea that this would increase the hydrogen ion conductivity in the catalyst layer, and, at the same time, reduce the amount of ionomer adsorbed on the catalyst support by adsorbing the ionomer on the catalyst-unsupporting fiber.

The inventors then took a hint that changing the solvent polarity in the catalyst ink causes the hydrophilic groups of the ionomer to orient outward, and found the following challenge in realizing their idea. In other words, the inventors found that there is a challenge to control the polarities of the solvent and fiber in the catalyst ink for catalyst layer formation in order to increase the adsorption force between the catalyst-unsupporting fiber and the ionomer rather than between the ionomer and the catalyst support. The inventors have then arrived at the subject matter of the present disclosure to address the challenge.

In view of the above, the present disclosure provides a catalyst layer, an electrolyte membrane electrode assembly, a fuel cell, and a method for manufacturing the catalyst layer that enable a relatively high-efficiency catalytic reaction that is capable of increasing the hydrogen ion conductivity without reducing catalytic activity due to the poisoning by the ionomer. The catalyst layer, the electrolyte membrane electrode assembly, the fuel cell, and the method for manufacturing the catalyst layer according to the present disclosure are capable of increasing the hydrogen ion conductivity in the catalyst layer by connecting the agglomerates of the ionomer and the mesoporous material in the catalyst layer with the ionomer adsorbed on the catalyst-unsupporting fiber. Accordingly, the catalyst layer, the electrolyte membrane electrode assembly, the fuel cell, and the method for manufacturing the catalyst layer according to the present disclosure enable a high-efficiency catalytic reaction that is capable of increasing the hydrogen ion conductivity without reducing catalytic activity due to the poisoning by the ionomer.

Hereinafter, an embodiment will be described in detail with reference to the drawings. However, more detailed explanation than necessary may be omitted. For example, detailed explanations of already well-known matters and duplicate explanations for substantially the same configuration may be omitted. This is to avoid unnecessary redundancy of the following description and to facilitate the understanding of those skilled in the art.

It should be noted that the accompanying drawings and the following description are provided in order for those skilled in the art to fully understand the present disclosure, and are not intended to limit the subject matter described in the claims by these.

### (Embodiment 1)

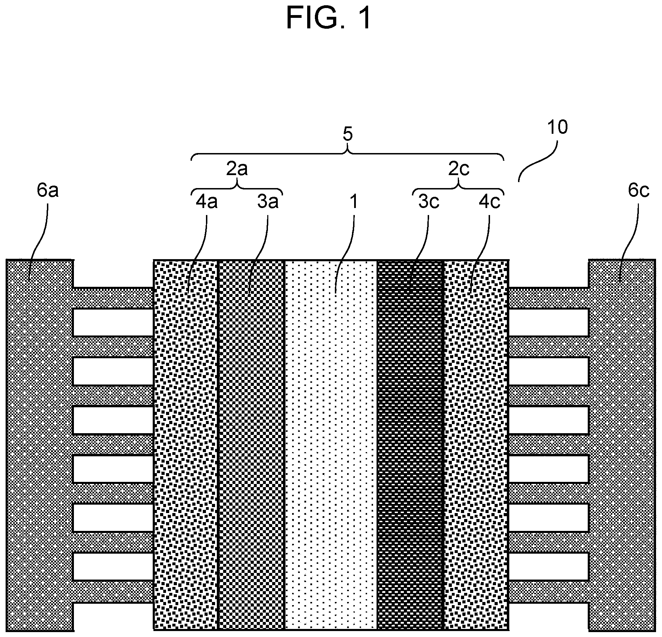

Hereinafter, Embodiment 1 as an example of the present disclosure will be described with reference to FIG. 1 to FIG. 3.

### [1-1. Configuration]

### (Fuel Cell)

FIG. 1 is a schematic diagram illustrating an example of a configuration of fuel cell 10 that is a basic unit of a fuel cell. Fuel cell 10 illustrated in FIG. 1 is a solid polymer electrolyte fuel cell that generates electricity upon a supply of hydrogen and oxygen.

Fuel cell 10 includes anode separator 6a and cathode separator 6c, as illustrated in FIG. 1. Fuel cell 10 also includes electrolyte membrane electrode assembly 5 between (sandwiched between) anode separator 6a and cathode separator 6c.

Anode separator 6a includes flow paths that allow hydrogen supplied to fuel cell 10 to flow to anode (fuel electrode) 2a of electrolyte membrane electrode assembly 5. Cathode separator 6c includes flow paths that allow oxygen supplied to fuel cell 10 to flow to cathode (air electrode) 2c of electrolyte membrane electrode assembly 5.

When a plurality of fuel cells 10 are stacked in the thickness direction, connection is made in the following manner. In other words, the side of anode separator 6a opposite from the side of anode separator 6a on which the flow paths are disposed is electrically connected to the side of cathode separator 6c of adjacent fuel cell 10 opposite from the side of cathode separator 6c on which the flow paths are disposed. Moreover, the side of cathode separator 6c opposite from the side of cathode separator 6c on which the flow paths are disposed is electrically connected to the side of anode separator 6a of adjacent fuel cell 10 opposite from the side of anode separator 6a on which the flow paths are disposed.

### (Electrolyte Membrane Electrode Assembly)

As illustrated in FIG. 1, electrolyte membrane electrode assembly 5 includes: electrolyte membrane 1; anode (fuel electrode) 2a that includes anode catalyst layer 3a and anode gas diffusion layer 4a; and cathode (air electrode) 2c that includes cathode catalyst layer 3c and cathode gas diffusion layer 4c. In electrolyte membrane electrode assembly 5, both sides of electrolyte membrane 1 are sandwiched between anode 2a and cathode 2c. Cathode catalyst layer 3c corresponds to an example of a catalyst layer according to the present disclosure.

Anode catalyst layer 3a is disposed on a first major surface of electrolyte membrane 1, and cathode catalyst layer 3c is disposed on a second major surface of electrolyte membrane 1. Anode gas diffusion layer 4a is disposed on anode catalyst layer 3a, on the side opposite from electrolyte membrane 1, and cathode gas diffusion layer 4c is disposed on cathode catalyst layer 3c, on the side opposite from electrolyte membrane 1.

Anode separator 6a is disposed on anode gas diffusion layer 4a, on the side opposite from anode catalyst layer 3a, and cathode separator 6c is disposed on cathode gas diffusion layer 4c, on the side opposite from cathode catalyst layer 3c.

### (Electrolyte Membrane)

Electrolyte membrane 1 conducts ions (hydrogen ions) between anode 2a and cathode 2c, and is required to have both a hydrogen ion conductivity and a gas barrier property. In the present embodiment, a perfluorosulfonic acid resin membrane is used as a material for electrolyte membrane 1 as an example. Such a membrane is preferable because the membrane has a high hydrogen ion conductivity and is stably present under a power generation environment of a fuel cell.

### (Gas Diffusion Layer)

Each of anode gas diffusion layer 4a and cathode gas diffusion layer 4c is a layer that has combined features of a current collection function, a gas permeability, and a hydrophobic property. Each of anode gas diffusion layer 4a and cathode gas diffusion layer 4c may include two layers that are a substrate and a coating layer.

The substrate may be any material that is excellent in electrical conductivity, and gas and liquid permeability. In the present embodiment, carbon paper is used as an example for the material of the substrate.

The coating layers are interposed between the catalyst layers (anode catalyst layer 3a and cathode catalyst layer 3c) and the substrates to reduce the contact resistance between the catalyst layers and the substrates and to increase liquid permeability (drainage).

The coating layers according to the present embodiment are formed mainly from an electrically conductive material, such as carbon black, and water-repellent resin such as polytetrafluoroethylene (PTFE).

### (Catalyst Layer)

Anode catalyst layer 3a is a layer that promotes an electrochemical reaction in anode 2a, and cathode catalyst layer 3c is a layer that promotes an electrochemical reaction in cathode 2c.

Anode catalyst layer 3a includes a catalyst support material, a catalyst, and an ionomer (hydrogen ion electrically conductive resin), in which the catalyst is supported at least on the catalyst support material.

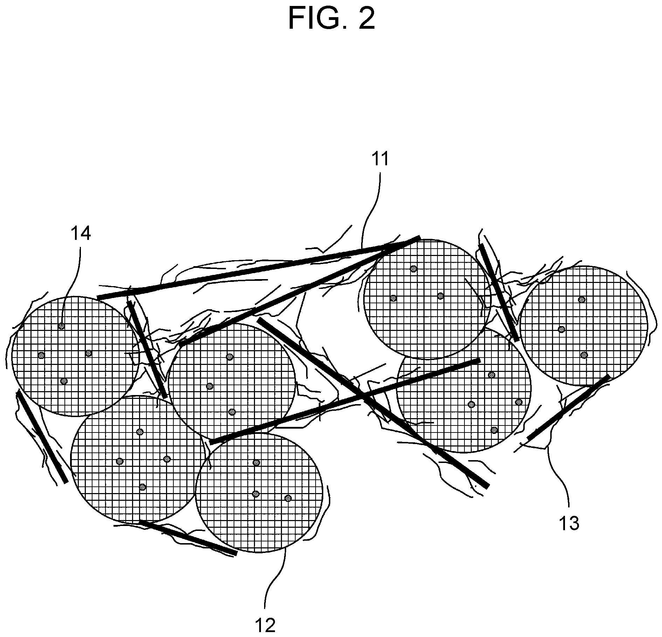

FIG. 2 illustrates an enlarged schematic cross-sectional view of a configuration of cathode catalyst layer 3c. As illustrated in FIG. 2, cathode catalyst layer 3c includes mesoporous material 12, catalyst 14, catalyst-unsupporting fiber 11 that does not support catalyst 14, and ionomer 13.

Ionomer 13 has a hydrogen ion conductivity, and at least partially covers the surface of mesoporous material 12 and the surface of catalyst-unsupporting fiber 11. Ionomer 13 contains a hydrophobic main chain and a hydrophilic side chain. Catalyst 14 is supported at least in the pores of mesoporous material 12. Catalyst-unsupporting fiber 11 has a hydrophobicity that is higher than the hydrophobicity of mesoporous material 12.

The ratio of the surface area of the portion of catalyst-unsupporting fiber 11 covered with ionomer 13 to the total surface area of catalyst-unsupporting fiber 11 is greater than the ratio of the surface area of the portion of mesoporous material 12 covered with ionomer 13 to the total surface area of mesoporous material 12.

### (Catalyst)

In the present embodiment, catalyst 14 is also used in anode catalyst layer 3a, as an example. The material of catalyst 14 is not limited as long as the material has a catalytic function of hydrogen or oxygen. However, platinum, mixtures or alloys containing platinum is preferrable in view of increasing, for example, the catalytic activity, poisoning resistance to carbon monoxide and heat resistance.

In the present embodiment, as an example, an alloy with a platinum content of 30 at% to 90 at% and a metal, different from platinum, with a content of 10 at% to 70 at% is used as the material for catalyst 14.

The average particle size of catalyst 14 is not particularly limited. However, in view of increasing the catalyst utilization and supportability in the catalyst support material, the average particle size of catalyst 14 is preferably 1 nm to 30 nm. The average particle size of catalyst 14 preferably has a size that fits within the pores of mesoporous material 12.

### (Catalyst Support Material)

In the present embodiment, mesoporous material 12, which is one of the porous carbons that include pores communicated with each other, is used as an example of a catalyst support material used in anode catalyst layer 3a and cathode catalyst layer 3c.

Mesoporous material 12 is preferably an electrically conductive material that includes pores of 2 nm to 50 nm in diameter (mode radius of 1 nm to 25 nm). Porous carbon is suitable for such a material. Examples of porous carbon include carbon blacks such as Ketjen black (registered trademark), acetylene black, Vulcan (registered trademark), and carbon with a mesoporous (pore) structure that includes a plurality of stacked layers of graphene sheets.

Mesoporous material 12 used for cathode catalyst layer 3c according to the present embodiment has a pore modal radius of 10 nm and a pore volume of 2.0 cm³/g before catalyst 14 is supported in the pores. Mesoporous material 12 has a modal diameter of 500 nm.

### (Catalyst-Unsupporting Fiber)

Examples of the material of catalyst-unsupporting fiber 11 include carbon fiber, carbon nanotubes, vapor-grown carbon fiber (VGCF (registered trademark)), glass fiber, and various fibers that have been treated for water repellency and have a hydrophobicity higher than the hydrophobicity of mesoporous material 12.

In the present embodiment, as an example, a vapor-grown carbon fiber (VGCF-H manufactured by Showa Denko K.K.) with an average fiber diameter of 150 nm and an average fiber length of 6 µm is used as catalyst-unsupporting fiber 11.

For example, when catalyst 14 is supported on carbon black, hydrophilic catalyst 14 is supported on the water-repelling carbon black, leading to a reduced hydrophobicity of the carbon black that supports catalyst 14. Therefore, carbon black that does not support catalyst 14 has a hydrophobicity higher than the hydrophobicity of carbon black that supports catalyst 14. Accordingly, carbon fiber which has not undergone hydrophilic treatment has a hydrophobicity higher than the hydrophobicity of carbon black that supports catalyst 14.

The fiber length of catalyst-unsupporting fiber 11 is not particularly limited, but may be greater than 0.22 times the modal diameter of mesoporous material 12 and less than or equal to the agglomerated particle size of mesoporous material 12.

The agglomerated particle size of mesoporous material 12 can be checked by measuring the particle size distribution of the catalyst ink in which the catalyst layer material and solvent are mixed and dispersed. In the present embodiment, the particle size distribution of the catalyst ink is such that the top peak particle size of agglomerated particles is 3 µm and the particle size of 90% of the cumulative size distribution is 6 µm.

The modal diameter of mesoporous material 12 according to the present embodiment is 500 nm. Accordingly, the agglomerated particle size of mesoporous material 12 is twelve times as large as the modal diameter of mesoporous material 12. Therefore, it can be understood that the fiber length of catalyst-unsupporting fiber 11 is preferably at most twelve times the modal diameter of mesoporous material 12.

When sphere a of radius r is hexagonal close-packed, connecting the centers of four neighboring spheres a will result in a regular tetrahedron with each side length of 2r. Since the distance between the center of a regular tetrahedron and each vertex of the regular tetrahedron is calculated to be approximately 1.22r, the maximum radius of a sphere that can be placed in the gap between four neighboring spheres a when sphere a of radius r is hexagonal close-packed is approximately 0.22r .

Therefore, in order to connect the particles of mesoporous material 12 with each other by catalyst-unsupporting fiber 11, the fiber length of catalyst-unsupporting fiber 11 is preferably longer than 0.22 times the modal diameter of mesoporous material 12.

On the other hand, when the fiber length of catalyst-unsupporting fiber 11 is longer than the agglomerated particle size of mesoporous material 12, cathode catalyst layer 3c has a sparse structure and the thickness of cathode catalyst layer 3c increases. This results in a longer diffusion path for hydrogen ions in cathode catalyst layer 3c, leading to a reduced hydrogen ion conductivity. Therefore, the fiber length of catalyst-unsupporting fiber 11 is preferably less than or equal to the agglomerated particle size of mesoporous material 12.

Therefore, the fiber length of catalyst-unsupporting fiber 11 is preferably greater than 0.22 times the modal diameter of mesoporous material 12 and less than or equal to the agglomerated particle size of mesoporous material 12 (twelve times the modal diameter of mesoporous material 12).

When catalyst-unsupporting fiber 11 is electrically conductive, the contact point between mesoporous material 12 and catalyst-unsupporting fiber 11 serves as an electrically conductive contact point. This leads to an increased number of electrically conductive contact points of cathode catalyst layer 3c. Accordingly, in addition to an increase in the hydrogen ion conductivity, it is also possible to increase the electrical conductivity of cathode catalyst layer 3c.

### (Ionomer)

In the present embodiment, ionomer 13 is also used as an example in anode catalyst layer 3a. Ionomer 13 that can be used in anode catalyst layer 3a and cathode catalyst layer 3c is preferably a polymer that contains a hydrophilic functional group (side chain) and a hydrophobic main chain. Examples of ionomer 13 include an ion-exchange polymer, such as fluorinated polymers that contain acidic functional groups and hydrocarbon-based polymers that contain acidic functional groups.

Ionomer 13 contains a polymer with a repeated structure as its main chain, and an acidic functional group. The acidic functional group is not particularly limited as long as the functional group exhibits acidity. Examples of the acidic functional group include sulfonic acid group, phosphoric acid group, and carboxylic acid group. Among these, the sulfonic acid group is preferrable in view of hydrogen ion (H⁺) conductivity.

As for the mechanism of hydrogen ion conduction by ionomer 13, a model has been proposed in which a hydrophilic core is formed by an acidic functional group, a network of clusters with water molecules localized in the core is formed, and hydrogen ions move through the hydrophilic network.

Examples of the fluorinated polymer that contains an acidic functional group include perfluorosulfonic acid polymer. The perfluorosulfonic acid polymer contains a polytetrafluoroethylene (PTFE) unit and a perfluorosulfonic acid unit, where the sulfonic acid is hydrophilic and the main chain that contains polytetrafluoroethylene is hydrophobic.

In the present embodiment, a perfluorosulfonic acid polymer is used as an example for ionomer 13 in anode catalyst layer 3a and cathode catalyst layer 3c.

Examples of the commercially available perfluorosulfonic acid polymer that can be used for ionomer 13 include Nafion (registered trademark) manufactured by DuPont, Aquivion (registered trademark) manufactured by Solvay, Flemion (registered trademark) manufactured by Asahi Glass Co., Ltd., and Aciplex (registered trademark) by Asahi Kasei Corp.

### (Method for Manufacturing Catalyst Layer)

Cathode catalyst layer 3c according to the present embodiment is manufactured by the following processes.

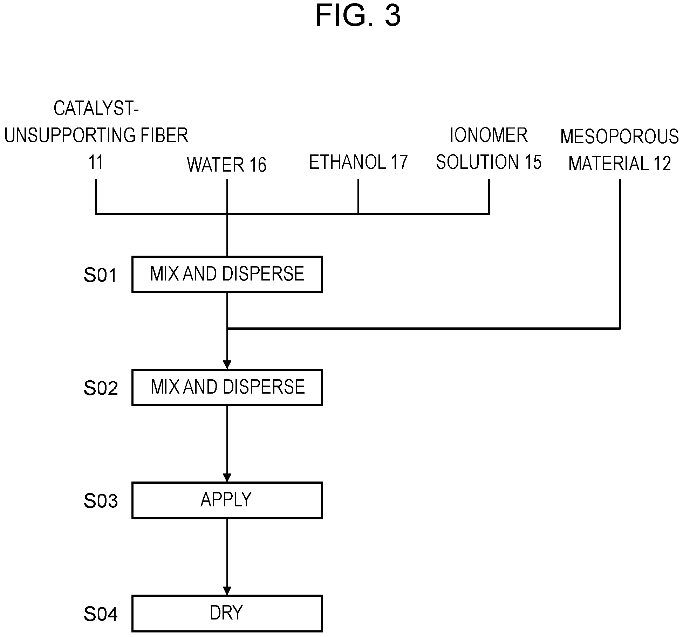

FIG. 3 is a schematic flowchart of a method for manufacturing cathode catalyst layer 3c.

### (First Step in Catalyst Layer Manufacturing Method)

A first step is to adsorb ionomer 13 on catalyst-unsupporting fiber 11 in a hydrophilic solvent, that is, to mix and disperse ionomer 13, catalyst-unsupporting fiber 11, and the hydrophilic solvent. To begin with, it is necessary to determine the solvent ratio for the hydrophilic solvent.

In the first step, water 16, ethanol 17, and ionomer solution 15 dispersed in water and ethanol are mixed to achieve such a composition that water is 85%, ethanol is 15%, and ionomer is 3wt%. Catalyst-unsupporting fiber 11 is then added to the mixture and dispersed. The dispersion method may use a ball mill, wet milling apparatus, or ultrasound.

The solvent ratio of water 16 and ethanol 17 as the hydrophilic solvent is selected by measuring the particle size distribution of ionomer 13 dispersed in a solvent of a certain solvent ratio with use of an ultrasonic particle size analyzer. Specifically, the solvent ratio may be selected such that when the percentage of water 16 is gradually increased from 50%, the modal diameter of ionomer 13 is smaller than the modal diameter of ionomer 13 when the percentage of water is 50%.

Ionomer 13 contains a hydrophilic sulfonic acid group (side chain) and a hydrophobic main chain. When ionomer 13 is added to a hydrophilic solvent, the main chain of ionomer 13 is repelled from water and agglomerate, and ionomer 13 takes the form such that a hydrophilic sulfonic acid group (side chain) is oriented outward.

This results in a lower peak in the particle size distribution of ionomer 13. By selecting a solvent ratio that causes a decrease in the peak in the particle size distribution due to this change in shape, it is possible to create an environment in the ink in which the repulsion between the hydrophobic main chain of ionomer 13 and water is high.

Water 16, ethanol 17, and ionomer solution 15 are added to achieve the hydrophilic solvent ratio described above, and catalyst-unsupporting fiber 11 is further added and dispersed (step S01). Highly hydrophobic catalyst-unsupporting fiber 11 then repels from water, and relatively more easily adsorb the hydrophobic main chain of ionomer 13. The hydrophobic main chain of ionomer 13 is adsorbed around catalyst-unsupporting fiber 11 and takes the form such that the hydrophilic sulfonic acid group (side chain) of ionomer 13 is oriented outward. This causes the agglomerates of catalyst-unsupporting fiber 11 and ionomer 13 to be dispersed in the hydrophilic solvent.

### (Second step in Catalyst Layer Manufacturing Method)

A second step is to add mesoporous material 12 that includes pores in which catalyst 14 is supported to the mixed dispersion liquid generated in the first step for mixing and dispersion (step S02). In other words, the second step is to add and mix mesoporous material 12 that includes pores in which catalyst 14 is supported to the mixture obtained in the first step to obtain ink. The dispersion method may use a ball mill, wet milling apparatus, or ultrasound.

Mesoporous material 12 that includes pores in which catalyst 14 is supported has a hydrophobicity lower than the hydrophobicity of catalyst-unsupporting fiber 11 because catalyst 14 is supported in the pores.

Therefore, the repulsion between the solvent and mesoporous material 12 in the hydrophilic solvent is lower than the repulsion between the solvent and catalyst-unsupporting fiber 11, and the attraction between the hydrophobic main chain of ionomer 13 and catalyst-unsupporting fiber 11 is higher than the attraction between the hydrophobic main chain of ionomer 13 and mesoporous material 12. Accordingly, mesoporous material 12 is dispersed without releasing the already formed adsorption between catalyst-unsupporting fiber 11 and the hydrophobic main chain of ionomer 13.

### (Third Step in Catalyst Layer Manufacturing Method)

A third step is to form cathode catalyst layer 3c (step S04) by applying (step S03) the ink generated in the second step and drying the ink. Cathode catalyst layer 3c may be formed on one main surface of electrolyte membrane 1 by directly applying the ink generated in the second step to the one main surface of electrolyte membrane 1 and drying the ink. Cathode catalyst layer 3c may also be formed by applying the ink generated in the second step to the substrate, drying the ink, and then transferring cathode catalyst layer 3c formed on the substrate to electrolyte membrane 1.

As a result, cathode catalyst layer 3c below is obtained. In other words, in cathode catalyst layer 3c obtained, catalyst-unsupporting fiber 11 covered with ionomer 13, ionomer 13, and mesoporous material 12 that includes pores in which catalyst 14 is supported are present in a dispersed or agglomerated state. Moreover, cathode catalyst layer 3c obtained has a structure in which the ratio of the surface area of the portion of catalyst-unsupporting fiber 11 covered with ionomer 13 to the total surface area of catalyst-unsupporting fiber 11 is greater than the ratio of the surface area of the portion of mesoporous material 12 covered with ionomer 13 to the total surface area of mesoporous material 12.

### [1-2. Operation]

The operation and action of fuel cell 10 configured as described above will be described below.

The operating method and action of fuel cell 10 will be described based on FIG. 1 and FIG. 2. The operation of fuel cell 10 is performed as below. In other words, with the temperature of fuel cell 10 maintained at 60°C, hydrogen with a dew point of 60°C is supplied to the flow paths of anode separator 6a at a flow rate of 100cc/min, and air with a dew point of 60°C is supplied to cathode separator 6c at a flow rate of 300cc/min. An electronic load device is then electrically connected between anode 2a and cathode 2c.

Next, the movement of the materials and an electrochemical reaction in fuel cell 10 during operation will be described. The hydrogen supplied to the flow paths of anode separator 6a passes through anode gas diffusion layer 4a, and reaches catalyst 14 in anode catalyst layer 3a.

In catalyst 14 of anode catalyst layer 3a, an oxidation reaction occurs in which hydrogen dissociates into hydrogen ions (H⁺) and electrons (e⁻), as indicated in [Chemical Formula 1].

[Chemical Formula 1] H₂ → 2H⁺ + 2e⁻

Hydrogen ions (H⁺) dissociated from the hydrogen by catalyst 14 in anode catalyst layer 3a permeate electrolyte membrane 1 from anode catalyst layer 3a side to cathode catalyst layer 3c side after reaching electrolyte membrane 1 through ionomer 13 in anode catalyst layer 3a. The hydrogen ions (H⁺) having permeated electrolyte membrane 1 from anode catalyst layer 3a side to cathode catalyst layer 3c side reach catalyst 14 in cathode catalyst layer 3c through ionomer 13 or water in cathode catalyst layer 3c.

On the other hand, electrons (e⁻) dissociated from hydrogen by catalyst 14 in anode catalyst layer 3a reach catalyst 14 in cathode catalyst layer 3c as described below. That is, the electrons (e⁻) pass through anode catalyst layer 3a, anode gas diffusion layer 4a, anode separator 6a, the electronic load device, cathode separator 6c, cathode gas diffusion layer 4c, and cathode catalyst layer 3c in the mentioned order and reach catalyst 14 in cathode catalyst layer 3c.

The oxygen in the air supplied to the flow paths of cathode separator 6c passes through cathode gas diffusion layer 4c, and reaches catalyst 14 in cathode catalyst layer 3c.

In catalyst 14 of cathode catalyst layer 3c, a reduction reaction occurs in which hydrogen ions (H⁺), oxygen (O), and electrons (e⁻) are combined to produce water, as indicated in [Chemical Formula 2].

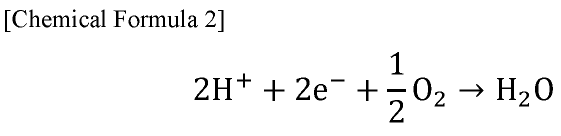

As illustrated in FIG. 2, cathode catalyst layer 3c according to the present embodiment includes the following structure. In other words, in cathode catalyst layer 3c, catalyst-unsupporting fiber 11 covered with ionomer 13, ionomer 13, and mesoporous material 12 that incudes pores in which catalyst 14 is supported are present in a dispersed or agglomerated state. The ratio of the surface area of the portion of catalyst-unsupporting fiber 11 covered with ionomer 13 to the total surface area of catalyst-unsupporting fiber 11 is greater than the ratio of the surface area of the portion of mesoporous material 12covered with ionomer 13 to the total surface area of mesoporous material 12.

This allows ionomer 13 that covers catalyst-unsupporting fiber 11 to connect the agglomerates of ionomer 13 and mesoporous material 12 formed in cathode catalyst layer 3c, thereby increasing the hydrogen ion conductivity in cathode catalyst layer 3c.

Cathode catalyst layer 3c according to the present embodiment increases the hydrogen ion conductivity in cathode catalyst layer 3c by using catalyst-unsupporting fiber 11 covered with ionomer 13. In cathode catalyst layer 3c, the ratio of the surface area of the portion of mesoporous material 12 covered with ionomer 13 to the total surface area of mesoporous material 12 is not high. Therefore, a decrease in catalytic activity due to contact with ionomer 13 does not occur. As a result, hydrogen ions are conducted from nearby ionomer 13, using water as a medium, to catalyst 14 that is not in contact with ionomer 13 positioned inside and outside mesoporous material 12.

The water that serves as a pathway for hydrogen ions in cathode catalyst layer 3c includes water that wets the surface of mesoporous material 12 that includes pores.

This water, other than the water from the reduction reaction in [Chemical Formula 2], has remained in cathode catalyst layer 3c as described below. In other words, prior to the aging process of preliminary operation (pre-conditioning power generation), referred to as aging after the assembly of fuel cell 10, humidified gas whose dew point is higher than the temperature of fuel cell 10 is supplied to the flow paths of anode separator 6a and cathode separator 6c. The condensed water obtained by condensation of humidified gas in electrolyte membrane electrode assembly 5 and the water generated in the power generation in the aging process remain in cathode catalyst layer 3c.

### [1-3. Advantageous Effects, etc.]

As described above, cathode catalyst layer 3c according to the present embodiment is a catalyst layer included in electrolyte membrane electrode assembly 5, and includes electrically conductive mesoporous material 12 and catalyst 14 that is supported at least in the pores of mesoporous material 12. Cathode catalyst layer 3c further includes catalyst-unsupporting fiber 11 that does not support catalyst 14 and hydrogen ion conductive ionomer 13 that at least partially covers the surface of mesoporous material 12 and the surface of catalyst-unsupporting fiber 11.

Catalyst-unsupporting fiber 11 has a hydrophobicity that is higher than the hydrophobicity of mesoporous material 12. Ionomer 13 contains a hydrophobic main chain and a hydrophilic side chain (functional group). The ratio of the surface area of the portion of catalyst-unsupporting fiber 11 covered with ionomer 13 to the total surface area of catalyst-unsupporting fiber 11 is greater than the ratio of the surface area of the portion of mesoporous material 12 covered with ionomer 13 to the total surface area of mesoporous material 12.

This allows ionomer 13 adsorbed on catalyst-unsupporting fiber 11 (ionomer 13 that covers catalyst-unsupporting fiber 11) to connect the agglomerates of mesoporous material 12 covered with ionomer 13 present in cathode catalyst layer 3c. As a result, the hydrogen ion conductivity in cathode catalyst layer 3c can be increased.

Moreover, in cathode catalyst layer 3c, the ratio of the surface area of the portion of mesoporous material 12 covered with ionomer 13 to the total surface area of mesoporous material 12 is not high. Hydrogen ions are conducted to catalyst 14, which is not in contact with ionomer 13 positioned inside and outside mesoporous material 12, from nearby ionomer 13 with water as a medium. This does not increase the effects of poisoning of catalyst 14 due to contact with ionomer 13.

Therefore, it is possible to increase the hydrogen ion conductivity while reducing a decrease in catalytic activity due to poisoning by ionomer 13. This leads to cathode catalyst layer 3c that enables a relatively high-efficiency catalytic reaction. In other words, cathode catalyst layer 3c according to the present embodiment enables a relatively high-efficiency catalytic reaction by increasing the hydrogen ion conductivity while reducing poisoning of the catalyst 14 by ionomer 13.

As in the present embodiment, in cathode catalyst layer 3c, it may be that the fiber length of catalyst-unsupporting fiber 11 is greater than 0.22 times the modal diameter of mesoporous material 12 and less than or equal to the agglomerated particle size of mesoporous material 12 (less than or equal to twelve times the modal diameter of mesoporous material 12).

With this, because the fiber length of catalyst-unsupporting fiber 11 is longer than the minimum gap in mesoporous material 12, ionomer 13 covering catalyst-unsupporting fiber 11 connect adjacent ionomers 13 covering adjacent mesoporous material 12. This increases the conduction pathways for hydrogen ions.

By setting the fiber length of catalyst-unsupporting fiber 11 to be less than or equal to the agglomerated particle size of mesoporous material 12 (less than or equal to twelve times the modal diameter of mesoporous material 12), it is possible to prevent the density of cathode catalyst layer 3c from decreasing, and make the length of the hydrogen ion conduction path the shortest necessary. Therefore, cathode catalyst layer 3c is capable of further increasing the hydrogen ion conductivity.

Moreover, as in the present embodiment, in cathode catalyst layer 3c, catalyst-unsupporting fiber 11 may be electrically conductive.

With this, the contact point between mesoporous material 12 and electrically conductive catalyst-unsupporting fiber 11 serves as an electrically conductive contact point. An increase in the number of electrically conductive contact points in cathode catalyst layer 3c increases the electrical conductivity of cathode catalyst layer 3c, facilitating a catalytic reaction.

Electrolyte membrane electrode assembly 5 according to the present embodiment includes electrolyte membrane 1, anode 2a disposed on a first main surface of electrolyte membrane 1, and cathode 2c disposed on a second main surface of electrolyte membrane 1. Cathode 2c includes cathode catalyst layer 3c.

The fuel cell according to the present embodiment includes electrolyte membrane electrode assembly 5.

With this, electrolyte membrane electrode assembly 5 and the fuel cell according to the present embodiment include cathode catalyst layer 3c as described above. This enables a relatively high-efficiency catalytic reaction by increasing the hydrogen ion conductivity while reducing poisoning of the catalyst by ionomer 13.

Moreover, the method for manufacturing cathode catalyst layer 3c according to the present embodiment is a method for manufacturing cathode catalyst layer 3c used in electrolyte membrane electrode assembly 5. The method for manufacturing cathode catalyst layer 3c includes a first step in which hydrogen ion conductive ionomer 13 that contains a hydrophobic main chain and a hydrophilic side chain (functional group), catalyst-unsupporting fiber 11 that does not support catalyst 14, and a hydrophilic solvent are mixed and dispersed. The method for manufacturing cathode catalyst layer 3c also includes a second step in which mesoporous material 12 that includes pores in which catalyst 14 is supported is added and mixed with the mixture obtained in the first step to obtain ink.

Catalyst-unsupporting fiber 11 has a hydrophobicity that is higher than the hydrophobicity of mesoporous material 12.

With this, in cathode catalyst layer 3c according to the present embodiment, the hydrophobic main chain of ionomer 13 and the hydrophilic solvent are repelled from each other in the first step of mixing and dispersing ionomer 13, catalyst-unsupporting fiber 11, and the hydrophilic solvent. Therefore, in the hydrophilic solvent, ionomer 13 takes the form such that a hydrophilic functional group (side chain) is oriented outward so that the hydrophobic main chain agglomerates inward.

When hydrophobic catalyst-unsupporting fiber 11 is added and dispersed here, hydrophobic catalyst-unsupporting fiber 11 is repelled from the hydrophilic solvent. Therefore, the hydrophobic main chain of ionomer 13 and catalyst-unsupporting fiber 11 attract to each other and agglomerate, taking the form such that the hydrophilic functional group (side chain) of ionomer 13 is oriented outward.

Next, in the second step in which mesoporous material 12 that includes pores in which catalyst 14 is supported is added and mixed with the mixture obtained in the first step, the hydrophobicity of mesoporous material 12 that includes pores in which catalyst 14 is supported is lower than the hydrophobicity of catalyst-unsupporting fiber 11. Therefore, the adsorption force between the hydrophobic main chain of ionomer 13 and mesoporous material 12 that supports catalyst 14 in the hydrophilic solvent is lower than the adsorption force between the hydrophobic main chain of ionomer 13 and catalyst-unsupporting fiber 11. Accordingly, mesoporous material 12 that includes pores in which catalyst 14 is supported is dispersed in the ink without releasing the adsorption between catalyst-unsupporting fiber 11 and ionomer 13.

In the third step in which the ink obtained in the second step is applied and dried, the ink is applied and dried to form cathode catalyst layer 3c. Cathode catalyst layer 3c thus formed have a structure in which a large amount of ionomer 13 is adsorbed on catalyst-unsupporting fiber 11, and surrounded by mesoporous material 12 that includes pores in which catalyst 14 is supported.

Cathode catalyst layer 3c, which is formed in the three separate processes, has a structure in which ionomer 13 adsorbed on catalyst-unsupporting fiber 11 connects the agglomerates of mesoporous material 12 covered with ionomer 13 in cathode catalyst layer 3c. This allows cathode catalyst layer 3c to increase the hydrogen ion conductivity in cathode catalyst layer 3c.

Moreover, in cathode catalyst layer 3c thus formed, the ratio of the surface area of the portion of mesoporous material 12 covered with ionomer 13 to the total surface area of mesoporous material 12 is not high. Hydrogen ions are conducted to catalyst 14, which is not in contact with ionomer 13 positioned inside and outside mesoporous material 12, from nearby ionomer 13 with water as a medium, and the effects of poisoning of catalyst 14 due to contact with ionomer 13 does not increase (activity does not decrease).

As a result, cathode catalyst layer 3c with a structure in which more ionomers 13 are adsorbed around catalyst-unsupporting fiber 11 can be obtained by relatively simple processes of ink preparation and application. Cathode catalyst layer 3c thus obtained enables a relatively high-efficiency catalytic reaction with both increased hydrogen ion conductivity and reduced decrease in catalytic activity.

### (Other Embodiments)

Embodiment 1 has been described above as an example of the technique according to the present disclosure. However, the technique according to the present disclosure is not limited to the example, and can be applied to any embodiments in which modifications, substitutions, additions, etc. are performed. Moreover, each structural element described in Embodiment 1 can be combined to form a new embodiment.

Other embodiments will be described below as examples.

In Embodiment 1, fuel cell 10 that includes the catalyst layer according to the present disclosure as cathode catalyst layer 3c has been described as an example of electrolyte membrane electrode assembly 5. The catalyst layer according to the present disclosure may be included in anode catalyst layer 3a.

When the catalyst layer according to the present disclosure is used for anode catalyst layer 3a, the amount of ionomer 13 that directly contacts with catalyst 14 is reduced. Accordingly, a decrease in catalytic activity can be reduced in the oxidation reaction [Chemical Formula 1] in which hydrogen is dissociated into hydrogen ions and electrons, which occurs in anode 2a.

Furthermore, by ensuring the hydrogen ion conductivity by ionomer 13 adsorbed on catalyst-unsupporting fiber 11, it is possible to reduce a decrease in the hydrogen ion conductivity of the anode catalyst layer according to the present variation caused due to a reduced amount of coverage of mesoporous material 12 with ionomer 13.

Therefore, it is possible to reduce a decrease in catalytic activity that is caused due to poisoning by ionomer 13 without impairing the hydrogen ion conductivity, leading to a relatively high-efficiency electrolyte membrane electrode assembly according to the present variation.

In Embodiment 1, a perfluorosulfonic acid resin membrane has been described as an example of electrolyte membrane 1. Electrolyte membrane 1 conducts ions (hydrogen ions) between anode 2a and cathode 2c. Electrolyte membrane 1 may be any membrane that includes both a hydrogen ion conductivity and a gas barrier property.

Therefore, electrolyte membrane 1 is not limited to the perfluorosulfonic acid resin membrane. Examples of electrolyte membrane 1 include an ion-exchange fluorine-containing resin membrane or ion-exchange hydrocarbon-based resin membrane. Of these, the perfluorosulfonic acid resin membrane is preferable because it has a high hydrogen ion conductivity and is stably present, for example, under a power generation environment of a fuel cell.

The ion-exchange amount of the ion-exchange resin is preferably set to at least 0.9 mEq/g and at most 2.0 mEq/g of dry resin. When the ion-exchange amount is at least 0.9 mEq/g of dry resin, a high hydrogen ion conductivity is likely to be obtained, and when the ion-exchange amount is at most 2.0 mEq/g of dry resin, swelling of the resin by water absorption thereof is reduced, so that the change in dimension of electrolyte membrane 1 is preferably reduced.

The thickness of electrolyte membrane 1 is preferably at least 5 µm and at most 50 µm. When the film thickness is at least 5 µm, high gas barrier properties can be obtained, and when the thickness is at most 50 µm, a high hydrogen ion conductivity is obtained.

In Embodiment 1, as an example, each of anode gas diffusion layer 4a and cathode gas diffusion layer 4c includes two layers that are carbon paper and a coating layer. Each of anode gas diffusion layer 4a and cathode gas diffusion layer 4c may be any layer as long as the layer has combined features of a current collection function, a gas permeability, and a hydrophobic property.

Therefore, each of anode gas diffusion layer 4a and cathode gas diffusion layer 4c is not limited to the configuration that includes two layers of carbon paper as a substrate and a coating layer. The substrate can be any material that is excellent in electrical conductivity and gas and liquid permeability. Examples of the material of the substrate other than carbon paper include porous materials such as carbon fiber cloth and carbon fiber felt.

The coating layers are interposed between the catalyst layers (anode catalyst layer 3a and cathode catalyst layer 3c) and the substrates to reduce the contact resistance between the catalyst layers and the substrates and to increase liquid permeability (drainage).

The coating layers are formed mainly from an electrically conductive material, such as carbon black, and water-repellent resin such as polytetrafluoroethylene (PTFE).

In Embodiment 1, an alloy containing platinum is used as an example of catalyst 14. Catalyst 14 is not particularly limited as long as catalyst 14 has a catalytic function of hydrogen or oxygen.

Examples of the material for catalyst 14 include metals such as platinum (Pt), ruthenium (Ru), iridium (Ir), rhodium (Rh), palladium (Pd), osmium (Os), tungsten (W), lead (Pb), iron (Fe), chromium (Cr), cobalt (Co), nickel (Ni), manganese (Mn), vanadium (V), molybdenum (Mo), gallium (Ga) and aluminum (Al), and mixtures, alloys, etc. of these metals.

Among these, platinum, mixtures or alloys containing platinum is preferrable in view of increasing, for example, the catalytic activity, poisoning resistance to carbon monoxide, and heat resistance.

When catalyst 14 is made of an alloy, although depending on the type of the metal alloyed, the composition of the alloy can be set such that the content of platinum is 30 at% to 90 at% and the content of other metals is 10 at% to 70 at%.

The average particle size of catalyst 14 is not particularly limited. However, in view of increasing the catalyst utilization and supportability in carbon support, the average particle size of catalyst 14 is preferably 1 nm to 30 nm. The average particle size of catalyst 14 is preferably the size that fits within the pores of mesoporous material 12.

In Embodiment 1, carbon black is used as an example of a catalyst support material for anode catalyst layer 3a and cathode catalyst layer 3c. The catalyst support material is not limited to carbon black. Electrically conductive porous carbon that includes internal pores (such as mesoporous carbon) can be used for a catalyst support material.

Mesoporous material 12 may have a pore mode radius of 1 nm to 25 nm and a pore volume of 1.0 cm³/g to 3.0 cm³/g before supporting catalyst 14. When the pore volume is at least 1.0 cm³/g, more catalyst 14 can be supported inside mesoporous material 12. When the pore volume is at most 3.0 cm³/g, the strength of mesoporous material 12 as a structure increases.

Mesoporous material 12 may have a modal diameter of 200 nm to 1000 nm. When the modal diameter of mesoporous material 12 is at least 200 nm, the region where ionomer 13 enters the pores is smaller relative to the pore volume, so that the rate of catalyst 14 poisoned by ionomer 13 is smaller.

Therefore, it is considered that the catalytic activity can be improved by setting the modal diameter of mesoporous material 12 to at least 200 nm. When the modal diameter of mesoporous material 12 is at most 1000 nm, it is easier for the reaction gas to be supplied to catalyst 14 supported in the pores of mesoporous material 12.

Since the above described embodiment is for exemplifying the technique of the present disclosure, various modifications, replacements, additions, omissions, and the like can be made within the scope of the appended claims or of their equivalents.

### INDUSTRIAL APPLICABILITY

The present disclosure is applicable, for example, to an electrolyte membrane electrode assembly that includes a catalyst layer. Specifically, the present disclosure is useful, for example, for the electrode catalyst used in electrolyte membrane electrode assemblies that form fuel cells, hydrogen purifier cells, or water electrolysis cells.

### REFERENCE MARKS IN THE DRAWINGS

- 1: electrolyte membrane
- 2a: anode
- 2c: cathode
- 3a: anode catalyst layer
- 3c: cathode catalyst layer
- 4a: anode gas diffusion layer
- 4c: cathode gas diffusion layer
- 5: electrolyte membrane electrode assembly
- 6a: anode separator
- 6c: cathode separator
- 10: fuel cell
- 11: catalyst-unsupporting fiber
- 12: mesoporous material
- 13: ionomer
- 14: catalyst
- 15: ionomer solution
- 16: water
- 17: ethanol

## Claims

1. A catalyst layer that is included in an electrolyte membrane electrode assembly, the catalyst layer comprising:
a mesoporous material that is electrically conductive;
a catalyst that is supported at least in a pore of the mesoporous material;
a catalyst-unsupporting fiber that does not support the catalyst; and
an ionomer that has a hydrogen ion conductivity, the ionomer at least partially covering a surface of the mesoporous material and a surface of the catalyst-unsupporting fiber,
wherein the catalyst-unsupporting fiber has a hydrophobicity that is higher than a hydrophobicity of the mesoporous material,
the ionomer contains a hydrophobic main chain and a hydrophilic side chain, and
a ratio of a surface area of a portion of the catalyst-unsupporting fiber covered with the ionomer to a total surface area of the catalyst-unsupporting fiber is higher than a ratio of a surface area of a portion of the mesoporous material covered with the ionomer to a total surface area of the mesoporous material.

2. The catalyst layer according to claim 1,
wherein the catalyst-unsupporting fiber has a fiber length that is greater than 0.22 times a modal diameter of the mesoporous material, and at most twelve times the modal diameter of the mesoporous material.

3. The catalyst layer according to claim 1 or claim 2,
wherein the catalyst-unsupporting fiber is electrically conductive.

4. An electrolyte membrane electrode assembly comprising:
an electrolyte membrane;
an anode that is disposed on a first main surface of the electrolyte membrane; and
a cathode that is disposed on a second main surface of the electrolyte membrane,
wherein the cathode includes the catalyst layer according to any one of claims 1 to 3.

5. A fuel cell comprising:
the electrolyte membrane electrode assembly according to claim 4.

6. A catalyst layer manufacturing method that is a method for manufacturing a catalyst layer that is included in an electrolyte membrane electrode assembly, the catalyst layer manufacturing method comprising:
a first step of mixing and dispersing (i) an ionomer that has a hydrogen ion conductivity and contains a hydrophobic main chain and a hydrophilic side chain, (ii) a catalyst-unsupporting fiber that does not support a catalyst; and (iii) a hydrophilic solvent; and
a second step of adding and mixing a mesoporous material that includes a pore in which the catalyst is supported to a mixture obtained in the first step to obtain an ink,
wherein the catalyst-unsupporting fiber has a hydrophobicity that is higher than a hydrophobicity of the mesoporous material.
